# EUROPEAN PATENT SPECIFICATION

(11) **EP 1 652 744 B1**
(45) Date of publication and mention of the grant of the patent: **08.12.2010**
(21) Application number: 05023655.3
(22) Date of filing: 28.10.2005
(51) Int. Cl.: B60T 8/32, B62L 3/00

(54) **Vehicular brake fluid pressure controller**
Bremsflüssigkeits-Drucksteuergerät für Fahrzeuge
Dispositif de commande de la pression de fluide de freinage pour véhicules

(30) Priority: 29.10.2004 JP 2004315623
(43) Date of publication of application: 03.05.2006
(73) Proprietor: NISSIN KOGYO CO., LTD., Ueda-shi, Nagano (JP)
(72) Inventor: Nakamura, Motoyasu c/o NISSIN KOGYO CO.,LTD., Nagano (JP)
(74) Representative: HOFFMANN EITLE

(56) References cited:
- EP-A1- 0 668 199
- DE-A1- 19 841 152
- GB-A- 2 249 597
- JP-A- 2000 071 963
- JP-A- 2002 264 787
- US-A1- 2002 067 071

## Description

### 1. Field of the Invention

The present invention relates to a vehicular brake fluid pressure controller, and more particularly, relates to a vehicular brake fluid pressure controller which can be mounted on a motorcycle, a three-wheeled vehicle or a buggy car (saddle-riding vehicle for traveling on a rough land).

### 2. Description of the Background Art

Conventionally there is a vehicular brake fluid pressure controller which electrically controls brake fluid pressure of a vehicle to allow the brake to actuate (for example, refer to Japanese Patent Unexamined Publication No. JP-A-2002-264787).

The vehicular brake fluid pressure controller disclosed in the JP-A-2002-264787 is provided with an electrical brake fluidpressure control mode and a mechanical brake fluidpressure control mode and structured in such a manner that components related to the electrical brake fluid pressure control mode are switched off to move to the mechanical brake-fluid pressure control mode, thereby providing a brake fluid pressure corresponding to an extent of the brake operation directly to a wheel cylinder to realize a fail-safe function, where the electrical brake-fluid pressure control mode is executed erroneously.

The above-described conventional vehicular brake fluid pressure controller is provided with a reservoir for reserving brake fluid, from which the brake fluid is supplied and then absorbed into a pump. Further, an intake valve is installed between the reservoir and the pump. In other words, the brake fluid absorbed into the pump from the reservoir is designed to be supplied through the intake valve. Therefore, in supplying the brake fluid from the reservoir, the intake valve eventually acts as an orifice (resistance), thereby resulting in a disadvantage that the brake fluid is absorbed into the pump less efficiently.

Further, in vehicular brake fluid pressure controllers in which brake fluid is subject to pressure by actuation of a pump, it has been demanded to improve the performance in controlling the pressure of the brake fluid.

### SUMMARY OF THE INVENTION

Therefore, the present invention provides a vehicular brake fluid pressure controller which can improve an absorption efficiency of the brake fluid absorbed into the pump and the performance in controlling the pressure of the brake fluid.

According to an aspect of the present invention, there is provided a vehicular brake fluid pressure controller, in which a separation valve communicates or blocks an output fluid pressure channel leading brake fluid from a master cylinder to a wheel brake side of the separation valve and a brake operation of the wheel brake by the brake fluid pressure is allowed on the wheel brake side of the separation valve in either state being communicated or blocked by the separation valve, the vehicular brake fluid pressure controller further comprising: a simulator connected between the master cylinder side of the output fluid pressure channel and the separation valve and comprising a dummy cylinder which imparts operating reaction force to a brake operator according to an operation of the brake operator; a detection unit for detecting the brake fluid pressure applied to the simulator; a cut valve disposed between the output fluid pressure channel and a wheel fluid pressure channel leading the brake fluid to the wheel brake and switching a state where the brake fluid is allowed or blocked to flow from the output fluid pressure channel to the wheel fluid pressure channel; a pump disposed between an intake fluid pressure channel leading the brake fluid from the output fluid pressure channel to the pump and a discharge fluid pressure channel leading the brake fluid from the pump to the wheel fluid pressure channel, the pump actuating in accordance with magnitude of the fluid pressure detected by the detection unit; an intake valve switching a state where the intake fluid pressure channel is opened or closed; a control valve unit provided with a function for switching a state where an open channel loading to the intake fluid pressure channel on the pump side of the intake valve is blocked, with the wheel fluid pressure channel being opened; a state where the open channel is opened, with the wheel fluid pressure channel being blocked; and a state where the open channel is blocked, with the wheel fluid pressure channel being blocked; a reservoir connected to said open channel between said control valve unit and the connection of said open channel to said intake fluid pressure channel on the pump side of the intake valve; a brake fluid reserving chamber connected to the intake fluid pressure channel on the pump side of the intake valve; wherein the brake fluid reserving chamber allows the brake fluid to flow therein when the pump is halted, and allows the brake fluid to flow out therefrom when the pump is actuated.

In embodiments, since a brake fluid reserving chamber in which brake fluid flows in and out when the pump is halted and actuated is installed between an intake valve fixed at an intake fluid pressure channel and the pump, the brake fluid reserved at the brake fluid reserving chamber can be absorbed into the pump without passing through the intake valve which gives resistance on absorption of the brake fluid. Therefore, when the pump is actuated, the brake fluid reserved at the brake fluid reserving chamber is directly absorbed into the pump through the intake fluid pressure channel, thereby providing a smooth absorption of the brake fluid into the pump and an effect of improving the absorption efficiency of the brake fluid into the pump.

As such, the absorption efficiency of the brake fluid into the pump is improved, therefore, the brake fluid can be smoothly supplied to an output fluid pressure channel leading to the wheel brake at the time of controlling the pressure, thereby resulting in an effect of improving the performance at the time of pressurizing and controlling.

According to an embodiment of the invention, it is preferable that the brake fluid reserving chamber comprising a free piston of which capacity increases due to inflow of the brake fluid when the pump is halted and decreases due to outflow of the brake fluid when the pump is actuated.

Such constitution of the brake fluid reserving chamber with the free piston makes it possible to reserve the brake fluid in a hermetic environment, therefore, providing an advantage that the brake fluid is free from change in viscosity by the influence of an ambient temperature and others.

According to an embodiment of the invention, it is preferable that said reservoir is constituted so that it is also said brake fluid reserving chamber.

According to an embodiment of the invention, it is preferable that the reservoir is constituted in such a way that it is also used as a brake fluid tank for reserving the brake fluid to be introduced into said master cylinder. According to an embodiment of the invention, it is preferable that a brake fluid supplying channel connects the intake fluid pressure channel to the brake fluid tank via a check valve.

As described above, the brake fluid reserving chamber can be constituted so as to be used as the reservoir or the brake fluid tank as well, thereby removing the necessity for separately providing a brake fluid reserving chamber inside a brake fluid pressure circuit and making it possible to reduce the cost and simplify the brake fluid pressure circuit.

With the vehicular brake fluid pressure controller according to the present invention, absorption efficiency of the brake fluid into the pump in addition to performance at the time of controlling the pressure can be improved.

### BRIEF DESCRIPTION OF THE DRAWINGS

FIG. 1 is a brake fluid pressure circuit diagram showing the vehicular brake fluid pressure controller according to one embodiment of the present invention.
FIG. 2 is a brake fluid pressure circuit diagram showing a state of the vehicular brake fluid pressure controller when an ordinary brake is applied.
FIG. 3 is a brake fluid pressure circuit diagram showing a state of the vehicular brake fluid pressure controller when an antilock brake is applied, the drawing showing a case where the brake fluid pressure acting on the wheel brake is reduced.
FIG. 4 is a drawing showing a case where the brake fluid pressure acting on the wheel brake is kept constant. FIG. 5 is a brake fluid pressure circuit diagram showing a modified example of the embodiment of the vehicular brake fluid pressure controller.
FIG. 6 is also a brake fluid pressure circuit diagram showing a modified example of the embodiment of the vehicular brake fluid pressure controller.

### DETAILED DESCRIPTION OF THE PREFERRED EMBODIMENTS

Hereinafter, a description is given in detail of the best mode for carrying out the present invention with reference to the drawings. In this description, the same symbols are used for the same elements to omit overlapping redundant description.

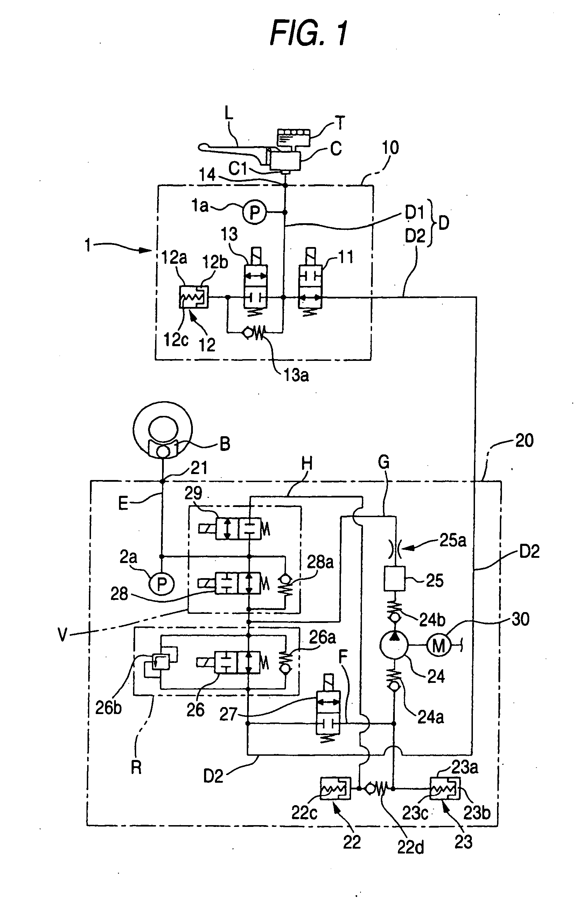

Regarding the drawings to be referred to, FIG. 1 is a brake fluid pressure circuit diagram showing the vehicular brake fluid pressure controller of one embodiment of the present invention.

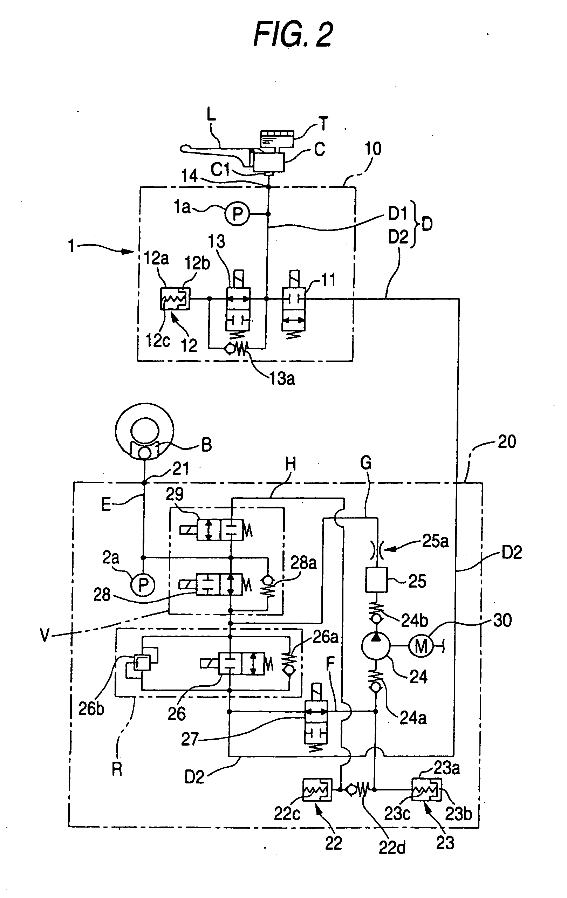

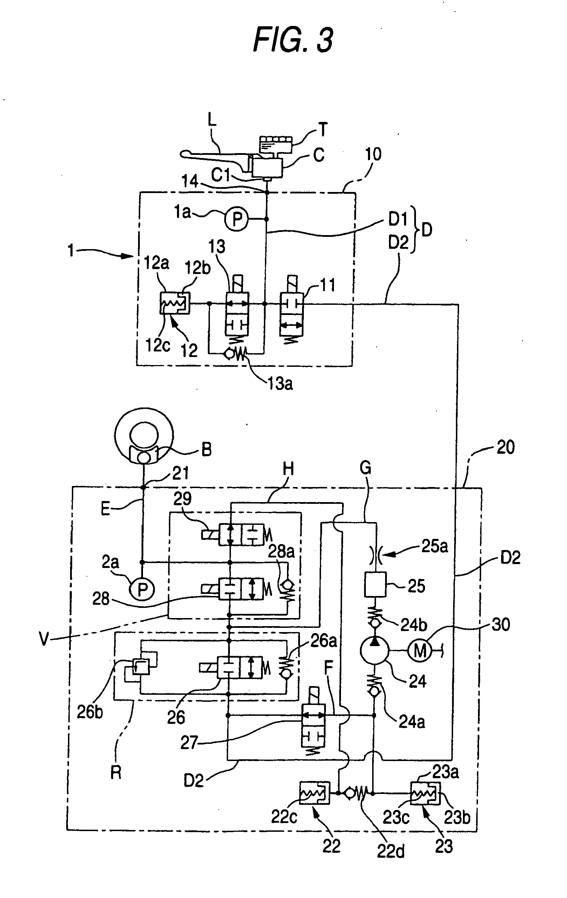

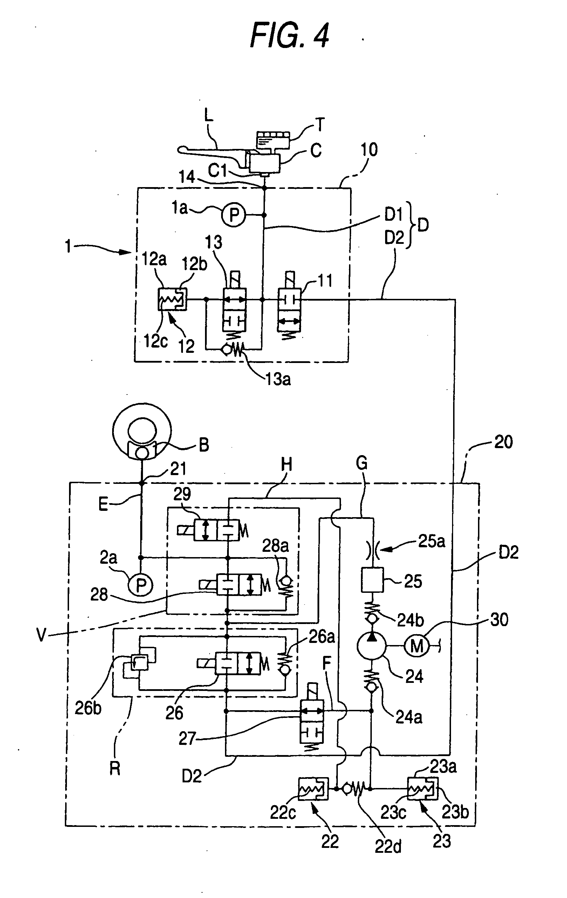

FIG. 2 is a brake fluid pressure circuit diagram showing a state of the vehicular brake fluid pressure controller at the time when an ordinary brake is applied. FIG. 3 is a brake fluid pressure circuit diagram showing a state of the vehicular brake fluid pressure controller when an antilock brake is applied, the drawing showing a case where the brake fluid pressure acting on the wheel brake is reduced. FIG. 4 is a drawing showing a case where the brake fluid pressure acting on the wheel brake is kept constant. Hereinafter, a description is given for an example where the vehicular brake fluid pressure controller is used in a motorcycle. A vehicular brake fluid pressure controller is usually constituted by two brake systems, namely, a front wheel brake and rear wheel brake. Since each system is constituted similarly, a description is given mainly for the system related to the front wheel brake and made for the system related to the rear wheel, whenever necessary.

As shown in FIG. 1, the vehicular brake fluid pressure controller 1 is disposed between a master cylinder C which produces a brake fluid pressure according to an operating force applied to a brake operator L by a driver and a wheel brake B, and provided with a simulator part 10 connected to the master cylinder C and a modulator part 20 connected to the wheel brake B. A separation valve 11 described below is installed on an output fluid pressure channel D leading from the simulator part 10 to the modulator part 20, and constituted in such a way that braking of the wheel brake B can be applied by the brake fluid pressure on the wheel brake B side, irrespective of being communicated with or is blocked by the separation valve 11. In other words, the vehicular brake fluid pressure controller 1 disclosed in the present embodiment is constituted in such a way that the output fluid pressure channel D is ordinarily blocked by the separation valve 11 and the wheel brake B is driven by the brake fluid pressure applied by actuation of a pump 24 (source of fluid pressure). To be more specific, it is constituted so that the brake fluid pressure according to an operating force of the brake operator L is detected at the simulator part 10 and the brake is controlled according to measured values of the force by controlling the actuation of the pump 24 at the modulator part 20. Hereinafter, the output fluid pressure channel D covering the upstream from the separation valve 11 (at the master cylinder C) will be described as output fluid pressure channel D1, and that covering the downstream from the separation valve 11 (at the wheel brake B) will be described as output fluid pressure channel D2, whenever necessary.

An output port Cl of the master cylinder C is connected to an inlet port 14 of the simulator part 10, and an outlet port 21 of the modulator part 20 is connected to the wheel brake B. Then, a fluid channel is constituted, which enters into the modulator part 20 from an inlet port 14 of thier simulator part 10 through the output fluid pressure channel D1 and the output fluid pressure channel D2 and communicated to an outlet port 21 of the wheel brake B. Further, for example, where the engine is not driven, the brake fluid pressure according to an operating force of the brake operator L is directly transmitted to the wheel brake B, described below.

The master cylinder C is provided with a cylinder (not illustrated) to which a brake fluid tank T that stores brake fluid is connected, and a rod piston (not illustrated) is assembled inside the cylinder, which slides in an axial direction of the cylinder by operation of the brake operator L to supply the brake fluid to the output fluid pressure channel D1 from the output port C1.

The simulator part 10 is connected to the output fluid pressure channel D leading to the modulator part 20, and provided with a separation valve 11 which switches from a state where the output fluid pressure channel D is communicated to a state where it is blocked or vice versa, a pressure detection sensor 1a connected to the output fluid pressure channel D1 located between the inlet port 14 and the separation valve 11, and the simulator 12. The separation valve 11 is a normally-open type electromagnetic valve and constituted so as to block the output fluid pressure channel D at ordinary times in a state where the engine (not illustrated) is driven. Further, it is constituted so as to communicatively connect the output fluid pressure channel D in a state where the engine (not illustrated) described below is not driven.

The pressure detection sensor 1a is a fluid pressure detection sensor for detecting the brake fluid pressure on the output fluid pressure channel D1 blocked by the separation valve 11.

The simulator 12 is provided with a dummy cylinder 12a, a piston 12b disposed inside the dummy cylinder 12a in a freely slidable way and a coil spring 12c which energizes the piston 12b and connected to the output fluid pressure channel D1 via an on-off valve 13. This simulator 12 is constituted in such a way that a brake operator L is operated to allow inflow of the brake fluid which flows out to the output fluid pressure channel D1 by moving the piston 12b without a load, thereby imparting to the brake operator L an operating reaction force according to the operation of the brake operator L, when the separation valve 11 is blocked and the on-off valve 13 communicates. In other words, the fluid pressure at a fluid chamber of the dummy cylinder 12a of the simulator 12 increases with an increase in pressure of the master cylinder C, when an operating force is given to the brake operator L. In this instance, the piston 12b is displaced at a position where an elastic force given from the coil spring 12c is in equilibrium with a fluid pressure inside the fluid chamber in an expanding direction of the fluid chamber, and brake fluid is fed into the fluid chamber from the output fluid pressure channel D1 in a quantity corresponding to an expansion of the fluid chamber, thereby producing an operational stroke according to the thus fed quantity at the brake operator L. Therefore, the brake operator L is secured for an operational sense and the brake fluid pressure is detected by the pressure detection sensor 1a, with this state kept.

The on-off valve 13 is anormally-close type electromagnetic valve and constituted so as to communicate between the output fluid pressure channel D1 and the simulator 12 when the engine (not illustrated) is driven at ordinary times. It is also constituted so as to block between the output fluid pressure channel D1 and the simulator 12 when the engine (not illustrated) described below is not driven. A check valve 13a is connected in parallel with the on-off valve 13. The check valve 13a is a valvewhich allows brake fluid to flow in only from the simulator 12 to the output fluid pressure channel D1 and also allows the brake fluid to flow in from the simulator 12 to the output fluid pressure channel D1 even in a state where the on-off valve 13 is closed, when input from the brake operator L is released.

The modulator part 20 is provided with a reservoir 22, a free piston 23 as a brake fluid reserving chamber, a pump 24, a damper 25, an orifice 25a, a regulator R, an intake valve 27 and a pressure detection sensor 2a, and also provided with a common electrical motor 30 for driving the respective pumps 24 of the front wheel brake B and the rear wheel brake B (not illustrated).

Hereinafter, a fluid channel leading to the regulator R through the separation valve 11 of the simulator part 10 is called an output fluid pressure channel D2 and that leading from the regulator R to the wheel brake B is called a wheel fluid pressure channel E. Further, a fluid channel leading from the output fluid pressure channel D2 to the pump 24 is called an intake fluid pressure channel F, and that leading from the pump 24 to the wheel fluid pressure channel E is called a discharge fluid pressure channel G, and that leading from the wheel fluid pressure channel E to the reservoir 22 is called an open channel H.

As described above, the modulator part 20 is ordinarily given a state where the output fluid pressure channel D is blocked by the separation valve 11 to separate fluid channels from the simulator part 10, and the wheel brake B is driven by the brake fluid pressure applied when the pump 24 is actuated. Therefore, in order to apply the brakes on the basis of measured values of the brake fluid pressure detected by a pressure detection sensor 1a at the simulator part 10, the wheel fluid pressure channel E is connected with a pressure detection sensor 2a for measuring the brake fluid pressure and also provided with a control valve unit V for controlling the brake fluid pressure applied to the wheel brake B. Then, actuation of the pump 24 at the modulator part 20 is controlled by a controller (not illustrated), for example, in such a way that measured values obtained by the pressure detection sensor 2a are the same as those obtained by the pressure detection sensor 1a at the simulator part 10. The pump 24 can be controlled for actuation in various way, for example, in such a way that in consideration of slip of wheels, measured values detected by the pressure detection sensor 2a can be set higher than those detected by the pressure detection sensor 1a at the simulator part 10, or the other way round, the values can be set lower, thereby applying an optimal brake whenever necessary, according to the driving conditions and others. Further, the measured results of the pressure detection sensor 2a are taken as needed by a controller (not illustrated) and judged by the controller for whether or not the brake fluid pressure is output (outflow of the brake fluid) from the pump 24, namely, whether the brake operator L is operated or not. The antilock brake and the traction are controlled on the basis of amagnitudeof the brake fluidpressure measured by the pressure detection sensor 2a.

The control valve unit V is provided with a function for switching a state where the open channel H is blocked, with the wheel fluid pressure channel E being opened, a state where the open channel H is opened, with the wheel fluid pressure channel E being blocked, and a state where the open channel H is blocked, with the wheel fluid pressure channel E being blocked, and constituted by an inlet valve 28, an outlet valve 29 and a check valve 28a.

The inlet valve 28 is a normally-open type electromagnetic valve mounted on the wheel fluid pressure channel E. Since the inlet valve 28 is opened at ordinary times, it allows the brake fluid pressure to transmit from the pump 24 to the wheel brake B. Further, the inlet valve 28 is blocked by a controller (not illustrated) when a wheel is about to be locked, thereby blocking the brake fluid pressure transmitted from the pump 24 to the wheel brake B.

The outlet valve 29 is a normally-close type electromagnetic valve installed between the wheel fluid pressure channel E and the open channel H. The outlet valve 29 is closed at ordinary times, however, it is operated by a controller (not illustrated), thereby relieving the brake fluid pressure acting on the wheel brake B to the reservoir 22 when a wheel is about to be locked.

The check valve 28a is connected in parallel with the inlet valve 28. The check valve 28a is a valve which allows the brake fluid to flow in only from the wheel brake B to the regulator R, and also allows the brake fluid to flow in from the wheel brake B to the regulator R even in a state where the inlet valve 28 is closed, when input from the brake operator L is cancelled.

The reservoir 22 is provided on the open channel H, having a function for absorbing the brake fluid pressure which is opened by opening the outlet valve 29. A check valve 22d is also installedbetween the reservoir 22 and the intake fluidpressure channel F, allowing the brake fluid to flow in only from the reservoir 22 to the pump 24. Further, a pump intake valve 24a is also installed between the reservoir 22 and the pump 24, allowing the brake fluid to flow in only from the reservoir 22 to the pump 24. In addition, a pump discharge valve 24b is installed between the pump 24 and the damper 25, allowing the brake fluid to flow out only from the pump 24 to the damper 25.

The free piston 23 is to reserve brake fluid and is installed between an intake valve 27 on the intake fluid pressure channel F and the pump 24. The free piston 23 is constituted by a cylindrical housing 23a the both ends of which are closed, a piston 23b which is freely slidably disposed inside the housing 23a to form a chamber for reserving the brake fluid and a coil spring 23c which energizes the piston 23b, and can reserve the brake fluid absorbed into the pump 24 at the chamber which is formed by the piston 23b for reserving the brake fluid. FIG. 1 shows graphically a state where the brake fluid is reserved at the free piston 23. It is desirable that the free piston 23 is provided with a chamber which can reserve the brake fluid returned when the pump 24 is halted, and may be available in any given form, constitution and others. Since the free piston 23 is installed between the intake valve 27 on the intake fluid pressure channel F and the pump 24, the brake fluid is absorbed in an increased quantity into the pump 24 through the intake fluid pressure channel F. The coil spring 23c of the free piston 23 is designed to be lower in spring constant than the coil spring 22c of the reservoir 22, by which the brake fluid returned when the pump 24 is halted is reserved at the free piston 23 before being reserved at the reservoir 22.

The pump 24 is installed between the intake fluid pressure channel F leading to the output fluid pressure channel D2 and the discharge fluid pressure channel G leading to the wheel fluid pressure channel E. As described above, it is provided with a function for absorbing the brake fluid reserved at the free piston 23 and the reservoir 22 and discharging the brake fluid to a discharged fluid pressure channel G. Therefore, the pump 24 is actuated to apply the brake fluid pressure to the wheel fluid pressure channel E. Further, the output fluid pressure channel D2 and the wheel fluid pressure channel E are recovered from a state of pressure reduction due to absorption of the brake fluid by the reservoir 22 at the time of applying an antilock brake described below. After completion of the brake operation by the brake operator L, a cut valve 26 described below allows the brake fluid to flow in from the wheel fluid pressure channel E to the output fluid pressure channel D2 and an intake valve 27 described below keeps the intake fluid pressure channel F opened, by which the brake fluid which flows into the wheel fluid pressure channel E is returned to the free piston 23 through the intake fluid pressure channel F.

Further, the damper 25 and the orifice 25a will attenuate the pulsation of the pressure of the brake fluid discharged from the pump 24 and the pulsation produced by actuation of the regulator R described below through cooperative action.

The regulator R is provided with a function for switching from a state where the brake fluid is allowed to flow in from the output fluid pressure channel D2 to the wheel fluid pressure channel E to a state where it is blocked or vice versa, and a function for adjusting the brake fluid pressure to the wheel fluidpressure channel E and the discharge fluidpressure channel G to a value lower than a predetermined value when the brake fluid is blocked for flowing in the wheel fluid pressure channel E from the output fluid pressure channel D2. Further, the regulator is provided with a cut valve 26, a check valve 26a and a relief valve 26b.

The cut valve 26 is a normally-open type electromagnetic valve installed between the output fluid pressure channel D2 leading to the master cylinder C and the wheel fluid pressure channel E leading to the wheel brake B, switching from a state where the brake fluid is allowed to flow in from the output fluid pressure channel D2 to the wheel fluid pressure channel E to a state where it is blocked or vice versa. The cut valve 26 is controlled by a controller (not illustrated) so as to be closed when the pump 24 is actuated. It also blocks the brake fluid pressure from applying to the intake fluid pressure channel F when the pump 24 is actuated, thereby allowing the brake fluid pressure from the pump 24 to transmit to the wheel fluid pressure channel E.

The check valve 26a is connected in parallel with the cut valve 26. The check valve 26a is a valve which allows the brake fluid to flow in only from the output fluid pressure channel D2 to the wheel fluid pressure channel E. Therefore, the check valve 26a allows the brake fluid to flow in from the output fluid pressure channel D2 to the wheel fluid pressure channel E, even if locked due to malfunctions and others, with the cut valve 26 being closed.

The relief valve 26b is connected in parallel with the cut valve 26, and opens in accordance with the brake fluid pressure on the wheel fluid pressure channel E and the discharge fluid pressure channel G exceeding a predetermined value.

The intake valve 27 is a normally close-type electromagnetic valve installed on the intake fluidpressure channel F, switching a state where the intake fluid pressure channel F is opened to a state where it is closed or vice versa. The intake valve 27 is opened (opening of the valve) by a controller (not illustrated) when the pump 24 is actuated. Further, the intake valve 27 is to be blocked (closing of the valve) by a controller (not illustrated) in accordance with halt of the pump 24. The blocking motion is to be delayed to some extent after the pump 24 is halted. Therefore, the brake fluid returned from the wheel fluid pressure channel E through the cut valve 26 is returned through intake fluid pressure channel F to the free piston 23 without fail. Further, the brake fluid inside the reservoir 22 is returned to the brake fluid tank T of the master cylinder C byway of the free piston 23, the intake fluid pressure channel F and the pump 24. The blocking motion of the intake valve 27 may be conducted with some delay by mechanical unit or by using a delay circuit or others.

Next, a description is given in detail of the motion of the vehicular brake fluid pressure controller 1 with reference to FIG. 1 through FIG. 4. In FIG. 2 through FIG. 4, only a brake system of the front wheel is illustrated for convenience and the same shall apply to a brake system of the rear wheel.

As shown in FIG. 2, actuation of an engine (not illustrated) will open the separation valve 11 at the simulator part 10 by a controller (not illustrated) to be put into a state where the output fluid-pressure channel D1 and the output fluid pressure channel D2 are blocked. Further, the on-off valve 13 is opened between the output fluid-pressure channel D1 and the simulator 12 to be put into a state where they are communicated. To be more specific, a fluid channel (output fluid pressure channel D) between the simulator part 10 and the modulator part 20 is put into a state where it is blocked and separated by the separation valve 11 and also a state where the brake operator L operates the brake fluid pressure to actuate the simulator 12 by operation of the brake operator L. In contrast, at the modulator part 20, it is put into a state where the output fluid pressure channel D2 is blocked, thereby bringing about a state where no brake fluid pressure is applied directly to the wheel brake B from the master cylinder C. Therefore, the brake fluid pressure resulting from the operating force of the brake operator L is applied as it is to the simulator 12 and the pressure detection sensor 1a is used to measure the brake fluid pressure.

### (At ordinary times)

If the brake operator L is operated at the time of applying an ordinary brake (at ordinary times) when there is no possible lock of wheels, such operation is measured by a pressure detection sensor 1a, and an electrical motor 30 at the modulator part 20 is driven by a controller (not illustrated) to actuate the pump 24. The cut valve 26 is closed by a controller (not illustrated) accordingly and the intake valve 27 is also opened. In association with actuation of the pump 24, the pump 24 is kept negative in pressure at the absorption part, and the brake fluid reserved at the free piston 23 (at the free piston 23 and the reservoir 22 where the brake fluid exists in the reservoir 22 as well) is absorbed by the pump 24 so as to be suctioned out from the free piston 23. The brake fluid suctioned by the pump 24 flows to the wheel fluid pressure channel E through the discharge fluid pressure channel G from the inlet valve 28 which is opened, thereby acting on the wheel brake B. In this instance, the pressure detection sensor 2a is used to measure the brake fluid pressure on the wheel fluid pressure channel E, thereby the measured values are loaded in a controller (not illustrated) whenever necessary. Then the controller judges whether or not the brake fluid pressure on the wheel brake B reaches a predetermined fluid pressure (for example, fluid pressure equal to that detected by the pressure detection sensor 1a). The pump 24 is controlled for actuation until a predetermined fluid pressure is obtained.

The pump 24 is halted when it is then judged by a controller (not illustrated) that the brake fluid pressure applied to the wheel brake B has reached a predetermined fluid pressure. Thereafter, the brake operator L is returned to turn the brake off. After the cut valve 26 is opened, the intake valve 27 is closed with some delay, thereby being put into a state where the wheel fluid pressure channel E, the output fluid pressure channel D2 and the intake fluid pressure channel F are communicated. Then, the brake fluid is returned to the intake fluid pressure channel F which is lower in pressure than the wheel fluid pressure channel E through the cut valve 26 and the output fluid pressure channel D from the wheel fluidpressure channel E. The brake fluid returned to the intake fluid pressure channel F is again reserved at the free piston 23 and stored as brake fluid to be supplied to the pump 24 when the pump 24 is actuated.

### (Control of antilock brake)

When a wheel is about to be locked in the midst of operating the brake operator L, an anti-lock brake control is started by a controller (not illustrated). In this instance, the antilock brake control unit to control the control valve unit V corresponding to a wheel brake of the wheel which is about to be locked, thereby reducing, increasing and keeping constant the brake fluid pressure acting on the wheel brake B. Further, at the time of controlling an antilock brake, as shown in FIG. 3, the regulator R is in a state of blocking the brake fluid flowing from the output fluid pressure channel D2 to the wheel fluid pressure channel E, and the intake valve 27 is in a state of communicating with the intake fluid pressure channel F.

Where the brake fluid pressure acting on the wheel brake B is reduced, as shown in FIG. 3, the wheel fluidpressure channel E is blocked by the control valve unit V to open the open channel H. To be more specific, the inlet valve 28 is excited by a controller (not illustrated) tobe closed (closingof the valve) , and the outlet valve 29 by a controller (not illustrated) to be opened (opening of the valve). Therefore, the brake fluid of the wheel fluid pressure channel E leading to the wheel brake B enters into the reservoir 22 through the open channel H, resulting in a reduction in brake fluid pressure which has acted on the wheel brake B.

Where the brake fluid pressure acting on the wheel brake B is kept constant, as shown in FIG. 4, the control valve unit V operates to block the wheel fluid pressure channel E and the open channel H, respectively. To be more specific, the inlet valve 28 is excited by the controller (not illustrated) to be closed (closing of the valve), and also the outlet valve 29 is demagnetized by the controller (not illustrated) to be closed (closing of the valve). Therefore, the brake fluid is confined into the fluid channel blocked by the wheel brake B, the inlet valve 28 and the outlet valve 29, by which the brake fluidpressure acting on the wheel brake B is kept constant as a result.

Where the brake fluid pressure acting on the wheel brake B is increased, the control valve unit V releases the wheel fluid pressure channel E to block the open channel H. To be more specific, the inlet valve 28 is demagnetized by a controller (not illustrated) to be opened (opening of the valve), and also the outlet valve 29 is demagnetized by a controller (not illustrated) to be closed (closing of the valve) (refer to FIG. 1). Therefore, by operation of the pump 24, the brake fluid which has flown out on the discharge fluid pressure channel G acts on the wheel fluid pressure channel E through the inlet valve 28, resulting in an increase in brake fluid pressure which acts on the wheel brake B.

Further, while the antilock brake is in control, the electrical motor 30 is driven continuously and the pump 24 is actuated accordingly. Then, the brake fluid returned to the intake fluid pressure channel F through the open channel H is again refluxed by the pump 24 to the wheel fluid pressure channel E again via the discharge fluid pressure channel G. Pulsation produced on the discharge fluid pressure channel G and others by actuation of the pump 24 is absorbed and suppressed by cooperative action of the damper 25 and the orifice 25a, thereby making it possible to realize a smooth reflux of the brake fluid.

### (At the time when an engine is not driven and others)

When an engine (not illustrated) is not driven, all electromagnetic valves including the separation valve 11 are demagnetized. This fact is described with reference to FIG. 1. The on-off valve 13 is in a state of blocking the output fluid pressure channel D1 and the simulator 12, the separation valve 11 is in a state of communicating with the output fluid pressure channel D, the regulator R is in a state where the brake fluid is allowed to flow in from the output fluid pressure channel D2 to the wheel fluid pressure channel E, the intake valve 27 is in a state where the intake fluid pressure channel F is blocked, and the control valve unit V is in a state where the wheel fluidpressure channel E is opened with the open channel H being blocked. To be more specific, the separation valve 11, the cut valve 26 of the regulator R and the inlet valve 28 of the control valve unit V are in an open state (opening of the valve), and the on-off valve 13, the intake valve 27 and the outlet valve 29 of the control valve unit V are in a closed state (closing of the valve) . Therefore, the brake fluid pressure produced from an operating force of the brake operator L is applied as it is to the wheel brake B, thereby making it possible to control the wheel brake B by an operating force of the brake operator L.

### (Brake control when a brake operator is not operated)

When the brake operator L is not operated, traction control is started by a controller (not illustrated) , according to the condition of a vehicle.

When controlling the wheel with the brake operator L not being operated, as shown in FIG. 2, inflow of the brake fluid from the output fluid pressure channel D to the wheel fluid pressure channel E is blocked by the regulator R and also the intake fluid pressure channel F is released by the intake valve 27. Further, the wheel fluid pressure channel E leading to the wheel brake B is opened by the control valve unit V and the pump 24 is actuated, with this state kept as it is. To be more specific, the cut valve 26 is excited by a controller (not illustrated) to be closed (closing of the valve), and also the intake valve 27 is excited by a controller (not illustrated) to be opened (opening of the valve). Further, the inlet valve 28 is demagnetized by the control valve unit V to be opened (opening of the valve) and to drive the electrical motor 30 so as to actuate the pump 24, with this state kept as it is. Therefore, the brake fluid mainly reserved at the free piston 23 is discharged by the pump 24 to the discharge fluid pressure channel G. The cut valve 26 is kept closed and the inlet valve 28 leading to the wheel brake B is kept opened. Therefore, the brake fluid supplied to the discharge fluidpressure channel G flows into the wheel fluid pressure channel E leading to the wheel brake B, by which the brake fluid pressure consequently acts on the wheel brake B, applying the brakes to the wheels.

At this time, the brake fluid reserved at the free piston 23 is absorbed directly by the pump 24 due to actuation of the pump 24. Therefore, the brake fluid can be supplied stably to the wheel fluidpressure channel E, even at the time of starting the pump 24.

Where the brake operator L is not used and the brake fluid pressure on the wheel fluid pressure channel E and the discharge fluid pressure channel G exceeds a predetermined value due to brake control and others, the relief value 26b acts to release the brake fluid from the wheel fluid pressure channel E and the discharge fluid pressure channel G to the output fluid pressure channel D2, thereby avoiding an excessive brake fluid pressure which otherwise would act on the wheel brake B.

Further, pulsation produced at the discharge fluidpressure channel G and others due to actuation of the regulator R is absorbed and controlled through cooperative actions of the damper 25 and the orifice 25a, thereby reducing an actuation noise related to the pulsation.

According to the vehicular brake fluid pressure controller 1 of the present embodiment described above, since the free piston 23 acting as a brake fluid reserving chamber is installed between the pump 24 disposed below an intake valve 27 of the pump 24 and the intake valve 27, the brake fluid can be absorbed into the pump 24 without passing through the intake valve 27 which gives resistance on absorption of the brake fluid. Therefore, when the pump 24 is actuated, the brake fluid reserved at the free piston 23 is directly absorbed into the pump 24 through the intake fluid pressure channel F, thereby realizing a smooth absorption of the brake fluid into the pump 24 and an effect of improving the absorption efficiency of the brake fluid into the pump 24.

Further, since the brake fluid is effectively absorbed into the pump 24, brake fluidcanbe smoothly supplied to the discharge fluid pressure channel G leading to the wheel brake B at the time of pressurizing and controlling the pressure by the vehicular brake fluid pressure controller 1, thereby improving the performance of controlling the pressure of the brake fluid. This fact is extremely effective in exhibiting to a maximum extent the brake performance including control of the antilock brake.

Since the free piston 23 is constituted so as to increase the capacity due to inflow of the brake fluid when the pump 24 is halted and decrease the capacity due to outflow of the brake fluid when the pump 24 is actuated, it is able to accurately control the brake fluid pressure regardless of simplicity in constitution. Further, the brake fluid reserving chamber is constituted by the free piston 23, by which the brake fluid can be reserved in a hermetic environment to provide an advantage that the brake fluid is not likely to change in viscosity by the influence of an ambient temperature and others.

Adescriptionhas beenmade for the embodiment of the present invention. The present invention shall not be restricted to the above-described embodiment, and many variations may be made without departing from the scope of the invention.

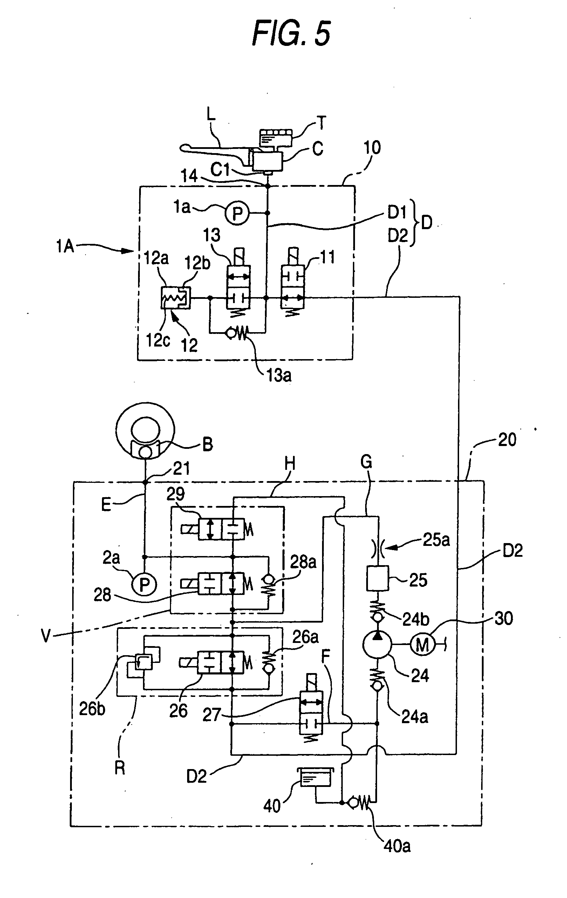

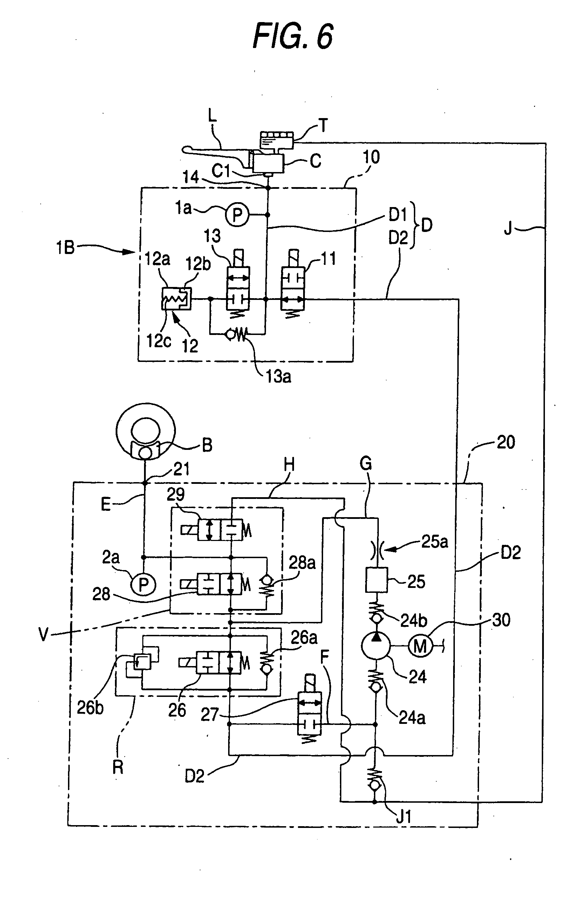

FIG. 5 and FIG. 6 show modified examples of the embodiment. FIG. 5 is a brake fluid pressure circuit diagram showing a modified example of the vehicular brake fluid pressure controller of the embodiment.

As shown in FIG. 5, the modified example of the vehicular brake fluid pressure controller 1A is constituted so that a brake fluid reserving chamber can also be used as a reservoir 40. The reservoir 40 is constituted by a container, the top of which is closed and installed between an intake valve 27 of an intake fluid pressure channel F and a pump 24 for reserving a predetermined quantity of brake fluid absorbed into the pump 24. As such, since the reservoir 40 is installed between the intake valve 27 of the intake fluid pressure channel F and the pump 24, the reservoir 40 reserves the brake fluid returned when the pump 24 is halted and also the brake fluid returned through an open channel H when an antilock brake is applied. Further, a check valve 40a which allows the brake fluid to flow in only from the reservoir 40 to the pump 24 is installed between the reservoir 40 and the intake fluid pressure channel F.

According to the vehicular brake fluid pressure controller 1A in which the above-described reservoir 40 is provided, the reservoir 40 is constituted so that it can also be used as a brake fluid reserving chamber for reserving the brake fluid to be absorbed by the pump 24, thereby removing the necessity for separately providing the brake fluid reserving chamber in a brake fluid pressure circuit and also making it possible to reduce the cost due to reduction in the number of parts and simplify the brake fluid pressure circuit.

FIG. 6 is a brake fluid pressure circuit diagram showing a modified example of the embodiment of the vehicular brake fluid pressure controller. As shown in this drawing, this modified example of the vehicular brake fluid pressure controller 1B is constituted in such a way that the brake fluid reserving chamber is also used as a brake fluid tank T for reserving the brake fluid to be introduced into the master cylinder C. In order to absorb the brake fluid at the brake fluid tank T into the pump 24, the brake fluid tank T is connected with the intake fluid pressure channel F installed between the intake valve 27 and the pump 24 via a brake fluid supplying channel J. Therefore, the brake fluid is directly supplied to the pump 24 through the brake fluid supplying channel J from the brake fluid tank T, when the pump 24 is actuated, and the brake fluid can be smoothly absorbed into the pump 24. A check valve J1 which allows the brake fluid to flow in only from the brake fluid supplying channel J to the pump 24 is installed between the brake fluid supplying channel J and the intake fluid pressure channel F.

According to the above-described vehicular brake fluid pressure controller 1B, the brake fluid tank T is constituted so that it can be also used as a brake fluid reserving chamber, thereby removing the necessity for separately providing the brake fluid reserving chamber in a brake fluid pressure circuit and also making it possible to reduce the cost due to reduction in the number of parts and simplify the brake fluid pressure circuit. Since it is not necessary to provide a brake fluid reserving chamber at the modulator part 20, in particular, the brake fluid pressure circuit at the modulator part 20 can be simplified to obtain the vehicular brake fluid pressure controller 1B which contributes to miniaturization.

While there has been described in connection with the preferred embodiments of the present invention, it will be obvious to those skilled in the art that various changes and modification may be made therein without departing from the present invention, and it is aimed, therefore, to cover in the appended claim all such changes and modifications as fall within the scope of the present invention as laid down in the appended claims.

## Claims

1. A vehicular brake fluid pressure controller, in which a separation valve (11) communicates or blocks an output fluid pressure channel (D) leading brake fluid from a master cylinder (C) to a wheel brake side of the separation valve (11) and a brake operation of the wheel brake (B) by the brake fluid pressure is allowed on the wheel brake side of the separation valve (11) in either state being communicated or blocked by the separation valve (11), the vehicular brake fluid pressure controller (1, 1A, 1B) further comprising:
a simulator (12) connected between the master cylinder (C) side of the output fluid pressure channel (D) and the separation valve (11) and comprising a dummy cylinder (12a) which imparts operating reaction force to a brake operator (L) according to an operation of the brake operator (L);
a detection unit (1a) for detecting the brake fluid pressure applied to the simulator (12);
a cut valve (26) disposed between the output fluid pressure channel (D) and a wheel fluid pressure channel (E) leading the brake fluid to the wheel brake (B) and switching a state where the brake fluid is allowed or blocked to flow from the output fluid pressure channel (D) to the wheel fluid pressure channel (E);
a pump (24) disposed between an intake fluid pressure channel (F) leading the brake fluid from the output fluid pressure channel (D) to the pump (24) and a discharge fluid pressure channel (G) leading the brake fluid from the pump (24) to the wheel fluid pressure channel (E), the pump (24) actuating in accordance with magnitude of the fluid pressure detected by the detection unit (1a);
an intake valve (27) switching a state where the intake fluid pressure channel (F) is opened or closed;
a control valve unit (V) provided with a function for switching
a state where an open channel (H) loading to the intake fluid pressure channel (F) on the pump side of the intake valve (27) is blocked, with the wheel fluid pressure channel (E) being opened;
a state where the open channel (H) is opened, with the wheel fluid pressure channel (E) being blocked; and
a state where the open channel (H) is blocked, with the wheel fluid pressure channel (E) being blocked;
a reservoir (22) connected to said open channel (H) between said control valve unit (V) and the connection of said open channel (H) to said intake fluid pressure channel (F) on the pump side of the intake valve (27);
a brake fluid reserving chamber (23, 40, T) connected to the intake fluid pressure channel (F) on the pump side of the intake valve (27);
wherein the brake fluid reserving chamber (23, 40, T) allows the brake fluid to flow therein when the pump (24) is halted, and allows the brake fluid to flow out therefrom when the pump (24) is actuated.

2. The vehicular brake fluid pressure controller according to Claim 1, wherein the brake fluid reserving chamber (23) comprising a piston (23b) of which capacity increases due to inflow of the brake fluid when the pump (24) is halted and decreases due to outflow of the brake fluid when the pump (24) is actuated.

3. The vehicular brake fluid pressure controller according to Claim 1, wherein said reservoir (22) is constituted so that it is also said brake fluid reserving chamber (40).

4. The vehicular brake fluid pressure controller according to Claim 3, wherein the reservoir (22) is constituted in such a way that it is also used as a brake fluid tank (T) for reserving the brake fluid to be introduced into said master cylinder (C).

5. The vehicular brake fluid pressure controller according to Claim 4, wherein a brake fluid supplying channel (J) connects the intake fluid pressure channel (F) to the brake fluid tank (T) via a check valve (J1).

## Patentansprüche

1. Fahrzeugbremsflüssigkeitsdruck-Controller, in welchem ein Trennventil (11) einen Ausgabeflüssigkeitsdruckkanal (D) kommuniziert oder blockt, welcher Bremsflüssigkeit von einem Hauptzylinder (C) zu einer Radbremsenseite des Trennventils (11) leitet und eine Bremsbetätigung der Radbremse (B) durch den Bremsflüssigkeitsdruck auf der Radbremsenseite des Trennventils (11) gestattet ist in beiderlei Zustand des Kommunizierens oder Blockens durch das Trennventil (11), wobei der Fahrzeugbremsflüssigkeitsdruck-Controller (1, 1A, 1B) ferner umfasst:
einen Simulator (12), der zwischen der Hauptzylinder-(C)-Seite des Ausgangsflüssikeitsdruckkanals (D) und des Trennventils (11) verbunden ist und einen Dummy-Zylinder (12a) umfasst, welcher eine Betätigungsreaktionskraft zu einem Bremsbetätiger (L) mitteilt entsprechend einer Betätigung des Bremsbetätigers (L);
eine Erfassungseinheit (1a) zum Erfassen des Bremsflüssigkeitsdrucks, der auf den Simulator (12) angewandt wird;
ein Schnittventil (26), welches zwischen dem Ausgangsflüssigkeitsdruckkanal (D) und einem Radflüssigkeitsdruckkanal (E) angeordnet ist, welcher die Bremsflüssigkeit zu der Radbremse (B) leitet, und Schalten eines Zustands, in welchem der Bremsflüssigkeit gestattet ist oder geblockt ist von dem Ausgangsflüssigkeitsdruckkanal (T) zu dem Radflüssigkeitsdruckkanal (E) zu fließen;
eine Pumpe (24), angeordnet zwischen einem Eingabeflüssigkeitsdruckkanal (F), welcher die Bremsflüssigkeit von dem Ausgabeflüssigkeitsdruckkanal (D) zu der Pumpe (24) leitet, und einem Auslassflüssigkeitsdruckkanal (G), welcher die Bremsflüssigkeit von der Pumpe (24) zu dem Radflüssigkeitsdruckkanal (E) leitet, wobei die Pumpe (24) anspricht in Übereinstimmung mit einer Höhe des Flüssigkeitsdrucks, der durch die Erfassungseinheit (1a) erfasst wird;
ein Eingabeventil (27), welches einen Zustand schaltet, in welchem der Eingabeflüssigkeitsdruckkanal (F) offen oder geschlossen ist;
eine Steuerventileinheit (V), bereitgestellt mit einer Funktion zum Schalten
eines Zustands, bei welchem ein offener Kanal (H), welcher zu dem Eingabeflüssigkeitsdruckkanal (F) auf der Pumpenseite des Eingabeventils (27) leitet, geblockt ist, wobei der Radflüssigkeitsdruckkanal (E) offen ist;
ein Zustand in dem der offene Kanal (H) offen ist, wobei der Radflüssigkeitsdruckkanal (E) geblockt ist; und
ein Zustand, in dem der offene Kanal (H) geblockt ist, wobei der Radflüssigkeitsdruckkanal (E) geblockt ist;
ein Reservoir (22), das zu dem offenen Kanal (H) verbunden ist zwischen der Steuerventileinheit (V) und der Verbindung des offenen Kanals (H) zu dem Eingabeflüssigkeitsdruckkanal (F) auf der Pumpenseite des Eingabeventils (27);
eine Bremsflüssigkeits-Vorhaltekammer (23, 40, T), verbunden zu dem Eingabeflüssigkeitsdruckkanal (F) auf der Pumpenseite des Eingabeventils (27);
wobei die Bremsflüssigkeits-Vorhaltekammer (23, 40, T) der Bremsflüssigkeit gestattet hinein zu fließen, wenn die Pumpe (24) angehalten ist, und der Bremsflüssigkeit gestattet heraus zu fließen, wenn die Pumpe (24) betätigt ist.

2. Fahrzeugbremsflüssigkeitsdruck-Controller nach Anspruch 1, wobei die Bremsflüssigkeits-Vorhaltekammer (23) einen Kolben (23b) umfasst, dessen Kapazität sich erhöht durch den Zufluss der Bremsflüssigkeit, wenn die Pumpe (24) angehalten ist, und sich verringert durch Ausfluss der Bremsflüssigkeit, wenn die Pumpe (24) betätigt ist.

3. Fahrzeugbremsflüssigkeitsdruck-Controller nach Anspruch 1, wobei das Reservoir (22) gebildet ist, so dass es ebenfalls die Bremsflüssigkeits-Vorhaltekammer (40) ist.

4. Fahrzeugbremsflüssigkeitsdruck-Controller nach Anspruch 3, wobei das Reservoir (22) in einer Weise gebildet ist, das ebenfalls als ein Bremsflüssigkeitstank (T) verwendet wird zum Vorhalten der in den Hauptzylinder (C) einzuführenden Bremsflüssigkeit.

5. Fahrzeugbremsflüssigkeitsdruck-Controller nach Anspruch 4, wobei ein Bremsflüssigkeitszuführkanal (J) den Eingabeflüssigkeitsdruckkanal (F) zu dem Bremsflüssigkeitstank (T) über ein Prüfventil (J1) verbindet.

## Revendications

1. Unité de commande de pression de fluide de frein pour véhicule, dans laquelle une vanne de séparation (11) met en communication ou bloque un canal de pression de fluide de sortie (D) conduisant un fluide de frein depuis un maître-cylindre (C) jusqu'à un côté frein de roue de la vanne de séparation (11) et une opération de freinage du frein de roue (B) par la pression de fluide de frein est autorisée sur le côté frein de roue de la vanne de séparation (11) dans l'un ou l'autre état de communication ou de blocage par la vanne de séparation (11), l'unité de commande de pression de fluide de frein pour véhicule (1, 1A, 1B) comprenant en outre :
un simulateur (12) relié entre le côté maître-cylindre (C) du canal de pression de fluide de sortie (D) et la vanne de séparation (11) et comprenant un cylindre factice (12a) qui communique une force de réaction d'opération à un opérateur de frein (L) selon une mise en oeuvre de l'opérateur de frein (L) ;
une unité de détection (1a) pour détecter la pression de fluide de frein appliquée au simulateur (12) ;
une vanne de coupure (26) disposée entre le canal de pression de fluide de sortie (D) et un canal de pression de fluide de roue (E) conduisant le fluide de frein au frein de roue (B) et commutant un état dans lequel le fluide de frein est autorisé ou empêché de s'écouler depuis le canal de pression de fluide de sortie (D) jusqu'au canal de pression de fluide de roue (E) ;
une pompe (24) disposée entre un canal de pression de fluide d'admission (F) conduisant le fluide de frein depuis le canal de pression de fluide de sortie (D) jusqu'à la pompe (24) et un canal de pression de fluide de décharge (G) conduisant le fluide de frein depuis la pompe (24) jusqu'au canal de pression de fluide de roue (E), la pompe (24) agissant selon une amplitude de la pression de fluide détectée par l'unité de détection (1a) ;
une vanne d'admission (27) commutant un état dans lequel le canal de pression de fluide d'admission (F) est ouvert ou fermé ;
une unité de vanne de commande (V) munie d'une fonction pour commuter
un état dans lequel un canal ouvert (H) conduisant au canal de pression de fluide d'admission (F) sur le côté pompe de la vanne d'admission (27) est bloqué, le canal de pression de fluide de roue (E) étant ouvert ;
un état dans lequel le canal ouvert (H) est ouvert, le canal de pression de fluide de roue (E) étant bloqué ; et
un état dans lequel le canal ouvert (H) est bloqué, le canal de pression de fluide de roue (E) étant bloqué ;
un réservoir (22) relié audit canal ouvert (H) entre ladite unité de vanne de commande (V) et la connexion dudit canal ouvert (H) audit canal de pression de fluide d'admission (F) sur le côté pompe de la vanne d'admission (27) ;
une chambre de réserve de fluide de frein (23, 40, T) reliée au canal de pression de fluide d'admission (F) sur le côté pompe de la vanne d'admission (27) ;
dans laquelle la chambre de réserve de fluide de frein (23, 40, T) permet au fluide de frein de s'écouler en son sein quand la pompe (24) est arrêtée, et permet au fluide de frein de s'écouler à partir de là lorsque la pompe (24) est actionnée.

2. Unité de commande de pression de fluide de frein pour véhicule selon la revendication 1, dans laquelle la chambre de réserve de fluide de frein (23) comprenant un piston (23b) dont la capacité augmente en raison de l'afflux du fluide de frein lorsque la pompe (24) est arrêtée et diminue en raison de l'écoulement du fluide de frein lorsque la pompe (24) est actionnée.

3. Unité de commande de pression de fluide de frein pour véhicule selon la revendication 1, dans laquelle ledit réservoir (22) est constitué de sorte que c'est également ladite chambre de réserve de fluide de frein (40).

4. Unité de commande de pression de fluide de frein pour véhicule selon la revendication 3, dans laquelle le réservoir (22) est constitué de sorte qu'il est également utilisé en tant que réservoir de fluide de frein (T) pour mettre en réserve le fluide de frein à introduire dans ledit maître-cylindre (C).

5. Unité de commande de pression de fluide de frein pour véhicule selon la revendication 4, dans laquelle un canal d'alimentation en fluide de frein (J) relie le canal de pression de fluide d'admission (F) au réservoir de fluide de frein (T) par l'intermédiaire d'un clapet de non-retour (J1).
